# EUROPEAN PATENT APPLICATION

(11) **EP 4 428 597 A1**
(43) Date of publication of application: **11.09.2024**
(21) Application number: 24161895.8
(22) Date of filing: 06.03.2024
(51) Int. Cl.: G02B 6/44

(54) **EQUIPMENT MOUNTING ARRANGEMENTS FOR FIBER OPTIC NETWORKS AND RELATED METHODS**

(30) Priority: 09.03.2023 US 202363451136 P; 28.06.2023 US 202363523907 P; 29.11.2023 US 202363603721 P
(71) Applicant: Corning Research & Development Corporation, Corning, New York 14831 (US)
(72) Inventor: HARMON, Shane Blackburn, North Carolina, 28625 (US); PAYNE, Jason Cameron, Fort Worth, 76131 (US); PREVRATIL, Karyne Poissant, Fort Worth, 76244 (US); SMITH, Joshua Thomas, North Carolina, 28117 (US)
(74) Representative: Reddie & Grose LLP

(57) **Abstract**

An equipment mounting arrangement for a fiber optic network is disclosed. The equipment mounting arrangement includes a mounting frame and a plurality of terminal supports connected to the mounting frame. Each of the plurality of terminal supports carries at least one terminal bracket and the at least one terminal bracket includes a plurality of shelves. The arrangement further includes a plurality of terminals and at least some of the plurality of shelves includes a respective one of the plurality of terminals. The arrangement includes a cable mount for supporting a plurality of fiber optic cables, where each of the plurality of fiber optic cables has a terminated end including a plurality of fiber optic connectors configured to be connected to the plurality of terminals in the equipment mounting arrangement. A method for configuring a fiber optic network using the equipment mounting arrangement is also disclosed.

## Description

### Priority Application

This application claims the benefit of priority of U.S. Provisional Application No. 63/603,721, filed on November 29, 2023, U.S. Provisional Application No. 63/523,907, filed on June 28, 2023, and U.S. Provisional Application No. 63/451,136, filed on March 9, 2023, each of the foregoing applications being incorporated herein by reference in entirety.

### Technical Field

This disclosure relates generally to fiber optic cables and fiber optic connectivity, and more particularly to structures and arrangements for mounting fiber optic terminals.

### Background

Large amounts of data and other information transmitted over the internet has led businesses and other organizations to develop large scale data centers for organizing, processing, storing, and/or disseminating large amounts of data. Data centers contain a wide range of communication equipment including, for example, servers, networking switches, routers, storage subsystems, etc. Data centers further include a large amount of cabling and equipment racks to organize and interconnect the communication equipment in the data center. For example, fiber optic cables and rack-mounted hardware to support optical connections are used extensively in data centers. Optical fibers can support very high bandwidths with lower signal loss compared to traditional data transmission mediums (e.g., copper wires).

The connections between communication equipment in large-scale data centers is typically not confined to a single building. Many modern data centers are multi-building campuses where the multiple buildings on the campus are interconnected by a local fiber optic network. High fiber-count optical cables serve as the backbone for the network and are sometimes referred to as "backbone cables". Many data centers today require backbone cables with thousands of optical fibers; fiber-counts of 3,456 optical fibers or even 6,912 optical fibers are becoming more common, and future backbone cables may include even greater numbers of optical fibers (e.g., 13,824) to help meet the ever-increasing demands of data centers.

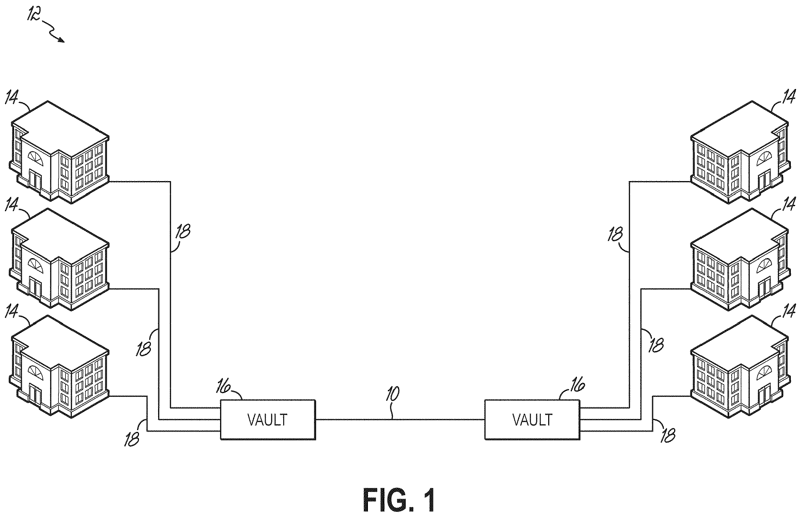

Fig. 1 schematically illustrates one example of a backbone cable 10 in a data center 12 that includes multiple buildings 14. The backbone cable 10 in this example extends between two vaults 16 positioned outside the buildings 14. The vaults 16 may be underground and used to store splice enclosures (below grade terminals; not shown) that protect connections between the backbone cable 10 and various auxiliary cables 18 that are used to connect to distribution equipment (not shown) within the buildings 14. Although multiple buildings 14 are shown as being associated with each vault 16, in alternative data center designs each vault 16 may service a single building 14 and/or multiple auxiliary cables 18 may extend from each vault 16 to the associated building(s) 14.

The optical connections between high fiber-count backbone cables 10 and auxiliary cables 18 are typically in the form of fusion splices. The splices are stored and organized in splice trays of the splice enclosures. While being functional to achieve its intended purpose, there are several challenges with this traditional approach. For example, the amount of labor and time required to complete thousands of fusion splices is significant. Fusion-splicing is also very operator-dependent; the quality of the splicing and the attenuation of the optical signal through the fusion splice may vary widely depending on the field technicians' skill and experience.

Second, fusion splicing can be disruptive if the various buildings 14 are connected to the backbone cable 10 at different times. For example, it may only be necessary to connect a first or second building 14 associated with one of the vaults 16 when the data center 12 is first built. The data center 12 may be operational with those buildings 14 for a period of time before expansion is needed to connect equipment in an additional (e.g., third) building 14 associated with the vault 16. This requires opening the splice enclosure that contains the end of the backbone cable 10 to perform additional fusion splicing for connecting optical fibers of the backbone cable 10 to optical fibers of the auxiliary cable(s) 18 that are associated with the additional building 14. Because of the potential to disrupt the previous fusion splices to other auxiliary cables 18, the data center operator typically takes the other buildings "offline" while the additional fusion splicing is completed. This lost operation time can have significant financial impact for the data center owner.

To overcome the challenges of fusion splicing, fiber optic connectors can be used for making one or more plug and play optical connections. For example, fiber optic connectors and fiber optic been developed for outdoor applications, and many different types of enclosures or other terminals exist for establishing connections with such fiber optic connectors.

As new applications emerge for the deployment of optical networks, including data center networks, there may be a need to more effectively manage connections established by outdoor (e.g., ruggedized) fiber optic connectors and associated terminals.

### Summary

In one aspect of the disclosure, an equipment mounting arrangement for a fiber optic network includes a mounting frame and a plurality of terminal supports connected to the mounting frame. Each of the plurality of terminal supports carries at least one terminal bracket, which includes a plurality of shelves. The equipment mounting arrangement includes a plurality of terminals and at least some of the plurality of shelves includes a respective one of the plurality of terminals. The equipment mounting arrangement further includes a cable mount for supporting a plurality of fiber optic cables. Each of the plurality of fiber optic cables has a terminated end, which includes a plurality of fiber optic connectors configured to be connected to the plurality of terminals.

Optionally, the mounting frame may be configured to be fixedly connected to a support wall, such as a support wall of a vault. The mounting frame may also include a plurality of support legs for at least temporarily supporting the mounting frame on a support surface, such as the floor of the vault. In one embodiment, the cable mount may be connected to the mounting frame. In an alternative embodiment, the cable mount may be connected to the support wall or to the support surface. In one embodiment, the equipment mounting arrangement may further include a cable guide positioned generally above the cable mount for guiding the plurality of fiber optic cables toward the cable mount. In one embodiment, the cable guide may be connected to the mounting frame. In an alternative embodiment, however, the cable support may be connected to the support wall or the support surface.

Optionally, the plurality of terminal supports may be arranged adjacent to each other in a side-by-side manner. For example, adjacent terminal supports may be connected to each other at confronting edges thereof. In one embodiment, the plurality of terminal supports may be arranged in a generally arcuate configuration that generally defines an inner region and an outer region. The cable mount may be positioned within the inner region of the generally arcuate configuration. Additionally, the at least one terminal bracket of each of the plurality of terminal supports may be connected to its respective terminal support so as to be positioned within the outer region of the generally arcuate configuration. In one embodiment, for example, the plurality of terminal supports may be arranged as a portion of a polygon to define the generally arcuate configuration.

Optionally, each of the plurality of fiber optic cables may include a furcation housing adjacent its terminated end. The cable mount is configured to support the furcation housing of each of the plurality of fiber optic cables. In one embodiment, the cable mount may be configured to support the furcation housing of each of the plurality of fiber optic cables through a releasable connection. By way of example, the releasable connection may include a slide on one of the furcation housing or the cable mount and a slide receiver on the other of the furcation housing or the cable mount. The slide receiver is configured to receive the slide to releasably connect the furcation housing to the cable mount.

Optionally, each of the plurality of terminal supports may include a first partition panel, which includes at least one retention clip for retaining one or more optical fibers or fiber optic cables. In addition, a second partition panel may be positioned between adjacent terminal supports of the plurality of terminal supports. The second partition panel also includes at least one retention clip for retaining one or more optical fibers or fiber optic cables.

Optionally, the equipment mounting arrangement may further include a parking frame positioned adjacent the plurality of terminal supports and a plurality of parking devices connected to the parking frame. Each of the plurality of parking devices may be configured to hold one or more unused fiber optic connectors from the plurality of fiber optic cables. In an exemplary embodiment, the parking frame may be connected to the mounting frame. In one embodiment, the parking frame may be arranged in a generally arcuate configuration that defines an inner region and an outer region similar to that of the plurality of terminal supports. The cable mount may be positioned on the inner region of the generally arcuate configuration. Each of the plurality of parking devices may be connected to the parking frame so as to be positioned on the outer region of the generally arcuate configuration. In one embodiment, the parking frame may be arranged as a portion of a polygon to define the generally arcuate configuration.

Optionally, each of the plurality of parking devices may include a parking bracket connected to and extending from the parking frame and at least one retention clip connected to the parking bracket. The at least one retention clip may be configured to hold one or more unused fiber optic connectors from the plurality of fiber optic cables. In another embodiment, the plurality of parking devices may include a parking bracket connected to and extending from the parking frame and a plurality of slide tubes may be connected to the parking bracket. Each of the plurality of slide tubes may be configured to hold an unused fiber optic connector from the plurality of fiber optic cables.

In another aspect of the disclosure, a fiber optic network includes at least one vault defining an interior and at least one equipment mounting arrangement according to the first aspect described above positioned in the interior of the at least one vault. Each of the plurality of terminals includes at least one input port and a plurality of auxiliary ports.

Optionally, the fiber optic network may further include at least one backbone fiber optic cable carrying a plurality of backbone optical fibers. At least some of the backbone optical fibers may be in optical communication with the input ports of the plurality of terminals in the at least one equipment mounting arrangement. The plurality of fiber optic cables includes a plurality of auxiliary cables each carrying a plurality of auxiliary optical fibers. At least some of the auxiliary optical fibers are in optical communication with the plurality of auxiliary ports of the plurality of terminals in the equipment mounting arrangement.

Optionally, each of the plurality of auxiliary cables includes an end including a furcation housing and a plurality of furcation legs extending from the furcation housing. Each of the furcation legs includes some of the plurality of fiber optic connectors. The furcation housing of each of the plurality of auxiliary cables may be connected to the cable mount. In one embodiment, a first group of the plurality of fiber optic connectors from the plurality of auxiliary cables is connected to respective auxiliary ports in the plurality of terminals and a second group of the plurality of fiber optic connectors from the plurality of auxiliary cables is connected to one of the plurality of parking devices.

In yet another aspect of the disclosure, a method of configuring a fiber optic network is disclosed. The fiber optic network has at least one backbone fiber optic cable carrying a plurality of backbone optical fibers and at least one auxiliary cable carrying a plurality of auxiliary optical fibers. The at least one auxiliary cable has a terminated end including a plurality of fiber optic connectors. The method includes providing at least one vault defining an interior and providing at least one equipment mounting arrangement according to the first aspect described above in the interior of the at least one vault. Each of the plurality of terminals includes at least one input port and a plurality of auxiliary ports. The method further includes optically connecting at least some of the backbone optical fibers with at least some of the input ports of the plurality of terminals in the at least one equipment mounting arrangement and optically connecting a first group of the plurality of fiber optic connectors of the at least one auxiliary cable to respective auxiliary ports of the plurality of terminals of the equipment mounting arrangement. The method further includes connecting a second group of the plurality of fiber optic connectors of the at least one auxiliary cable to a respective parking device of the plurality of parking devices of the equipment mounting arrangement.

Optionally, the method may further include subsequently removing at least one fiber optic connector of the second group of the plurality of fiber optic connectors from its respective parking device and optically connecting the at least one fiber optic connector to a respective auxiliary port of the plurality of terminals of the equipment mounting arrangement.

Optionally, the method may further include subsequently expanding the fiber optic network by providing another at least one auxiliary cable carrying a plurality of auxiliary optical fibers, where the another at least one auxiliary cable has a terminated end including a plurality of fiber optic connectors. The method may include optically connecting a third group of the plurality of fiber optic connectors of the another at least one auxiliary cable to respective auxiliary ports of the plurality of terminals of the equipment mounting arrangement, and connecting a fourth group of the plurality of fiber optic connectors of the another at least one auxiliary cable to a respective parking device of the plurality of parking devices of the equipment mounting arrangement.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic illustration of one example of a data center having multiple buildings interconnected by a backbone cable.
Fig. 2 is a schematic illustration of an exemplary optical distribution system for a data center.
Fig. 2A is a perspective view of an example multiport terminal for use in the optical distribution system of Fig. 2.
Fig. 3 is a perspective view of an equipment mounting arrangement for arranging fiber optic terminals according to an embodiment of the disclosure.
Fig. 4 is a top view of the equipment mounting arrangement of Fig. 3.
Fig. 5 is a partial cross-sectional view of the equipment mounting arrangement of Fig. 3 schematically showing an exemplary routing for a cable to be placed in a parked position.
Fig. 6 is a partial cross-sectional view of the equipment mounting arrangement of Fig. 3 schematically showing an exemplary routing for a cable being moved from a parked position to being connected to a multiport terminal.
Fig. 7 is a partial cross-sectional view of the equipment mounting arrangement of Fig. 3 schematically showing a cable connected to a multiport terminal.
Fig. 8 is an enlarged perspective view of a cable connected to a multiport terminal and the proposed routing of the connected cable.
Fig. 9 is a partial cross-sectional view of the connected cable of Fig. 8 showing its final routing in the equipment mounting arrangement.
Fig. 10 is an enlarged perspective view of a cable and an attachment fixture to affix the cable to a mounting plate.
Fig. 11 is a perspective view of a plurality of retention clips to retain cables.
Fig. 12 is a perspective view of a plurality of slide tubes to retain cables.

### Detailed Description

Various embodiments will be clarified by examples in the description below. In general, the description relates to optical distribution systems for data centers or other applications where one or both ends of a high fiber-count backbone cable branch out to serve multiple buildings. In other words, the multiple buildings served by one of the ends of the backbone cable are separate branches of the optical distribution system; they are not connected in series. To that end, the concepts disclosed herein are related to an equipment mounting arrangement for terminals and associated cable assemblies having suitable fiber optic connectors that may optically connect with the terminals. The equipment mounting arrangement permits the connection of additional fiber optic cables to the terminals without disrupting live data in previously connected fiber optic cables. Thus, additional buildings may be connected to the backbone cable without disrupting other buildings that are already connected the backbone cable. The equipment mounting arrangement facilitates connecting a first group of cables to one or more terminals and "parking" a second group of cables in an unused configuration until they are needed, at which time, they may be connected to the one or more terminals. These and other benefits of the disclosure will now be described in additional detail below.

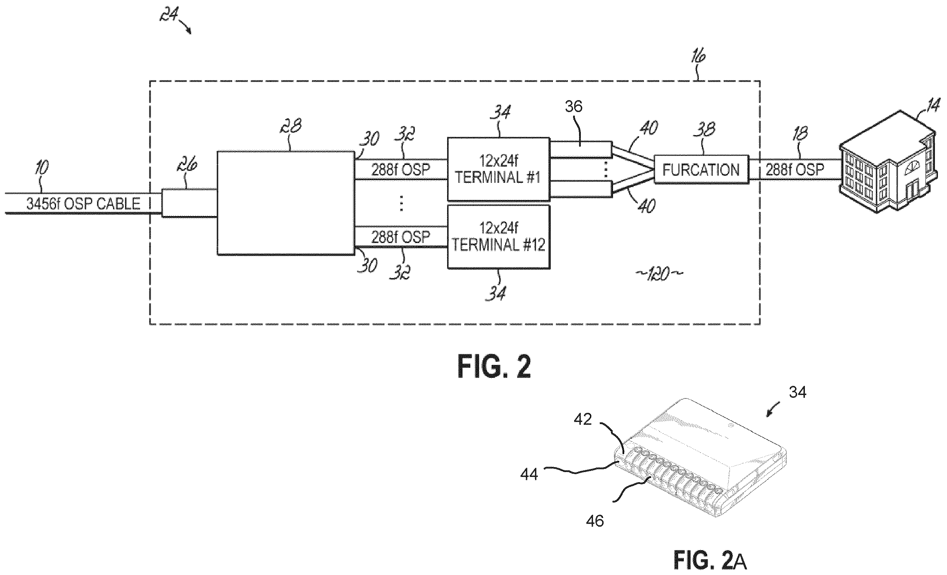

Fig. 2 is a schematic illustration of one embodiment of an optical distribution system 24 for the data center 10 (Fig. 1). The dashed lines in Fig. 2 represent one of the vaults 16 of the data center 10. The backbone cable 10 extends into the vault 16, and auxiliary cables 18 extend out of the vault to the buildings 14 like Fig. 1. Only one auxiliary cable 18 and one building 14 are shown in Fig. 2 to simplify the drawing. Within the vault 16, an end 26 of the backbone cable 10 is received in an outdoor enclosure 28, which also receives ends 30 of outdoor tether cables 32. Connections are established between the backbone cable 10 and the outdoor tether cables 32 within the outdoor enclosure 28. The connections may be established by fusion splicing optical fibers of the backbone cable 10 to optical fibers of the outdoor tether cables 32. Alternatively, the connections may be established using connection interfaces (e.g., optical connectors) pre-installed on the backbone cable 10 and the outdoor tether cables 32. The outdoor tether cables 32 extend a relatively short distance to respective multiport terminals 34 positioned within the vault 16. For example, the outdoor tether cables 32 may be less than 100 meters (m), less than 50 m, or even less than 10 m so that the multiport terminals 34 can be placed in the vault 16 with the outdoor enclosure 28 without having to store excessive amounts of cable slack.

The multiport terminals 34 are used to manage connections between the outdoor tether cables 32 and the auxiliary cables 18. More specifically, and as will be discussed further below, the multiport terminals 34 are used to manage connections between the outdoor tether cables 32 and outdoor optical connectors 36 that define terminated ends of the auxiliary cables 18. End sections of the auxiliary cables 18 extend into the vault 16 and each include a furcation housing 38 that branches out the auxiliary cable 18 into cable or furcation legs 40. Each of the outdoor optical connectors 36 terminates one of the furcation legs 40 and connects to one of the multiport terminals 34.

Additional reference can be made to an example multiport terminal 34 shown in Fig. 2A to better appreciate connections established by the multiport terminals 34 of Fig. 2. The multiport terminal 34 includes a face or side 42 with an input port 44 configured to receive one of the outdoor tether cables 32 and auxiliary ports 46 (also referred to as connection ports 46) configured to receive the outdoor optical connectors 36. An outdoor tether cable 32 may, for example, extend through the input port 44 and into an interior of the multiport terminal 34. The outdoor tether cable 32 may be pre-terminated with optical connectors (not shown in Figs. 2 and 2A) that route to and are received in the back of the auxiliary ports 46 . The auxiliary ports function as receptacles that establish connections between the optical connectors of the outdoor tether cables 32 and the outdoor optical connectors 36.

In alternative embodiments, the outdoor tether cables 32 may not be pre-terminated. For example, the outdoor tether cables 32 may extend into the multiport terminals 34 and be fusion spliced to pigtails that include connectorized ends received in the back of the auxiliary ports 46. Alternatively, the input ports 44 may be configured as receptacles like the auxiliary ports 46, and the outdoor tether cables 32 may themselves be terminated with respective outdoor optical connectors (not shown) that are received in the front of the input ports 44. In such embodiments additional cables and/or fiber optic components may then be used within the multiport terminals 34 to ultimately establish optical communication between the outdoor tether cables 32 and the outdoor optical connectors 36.

The multiport terminal 34 in Fig. 2A and multiport terminals 34 in other figures described below are shown as 12-port Evolv^{™} terminals available from Corning Optical Communications LLC ("Corning"). Such terminals are compatible with outdoor connectors from Corning referred to as Pushlok^{™} connectors. Additional details relating to these outdoor terminals and outdoor connectors, and variants thereof, can be found in the following patent or patent application publication numbers: US10,359,577; US10,379,298; US10,802,228; US10,809,463; US2020/0103599; US2020/0057205; and US2020/0096710, wherein the disclosures of each of the foregoing publications (collectively "the Corning Pushlok Publications") are fully incorporated herein by reference. In alternative embodiments, the auxiliary ports of the multiport terminals may be configured for other types of outdoor optical connectors. For example, the multiport terminals may be configured to be compatible with OptiTap^{®} connectors from Corning, FastConnect^{™} connectors sold by Huawei Technologies Co., Ltd., DLX^{®} connectors sold by CommScope, Inc. of North Carolina ("CommScope"), or Prodigy^{™} connectors sold by CommScope. These and other outdoor optical connectors are sometimes referred to as ruggedized optical connectors or hardened optical connectors because of their robustness and environmental sealing features.

The term "outdoor" is used in connection with various elements (e.g., outdoor enclosure 28, outdoor tether cable 32, outdoor optical connector 36) to designate that the elements are suitable for outdoor environments. The various outdoor elements introduced above are referred to below without using the term "outdoor" for convenience; it will be understood that the elements are "outdoor" elements based on the introduction already provided.

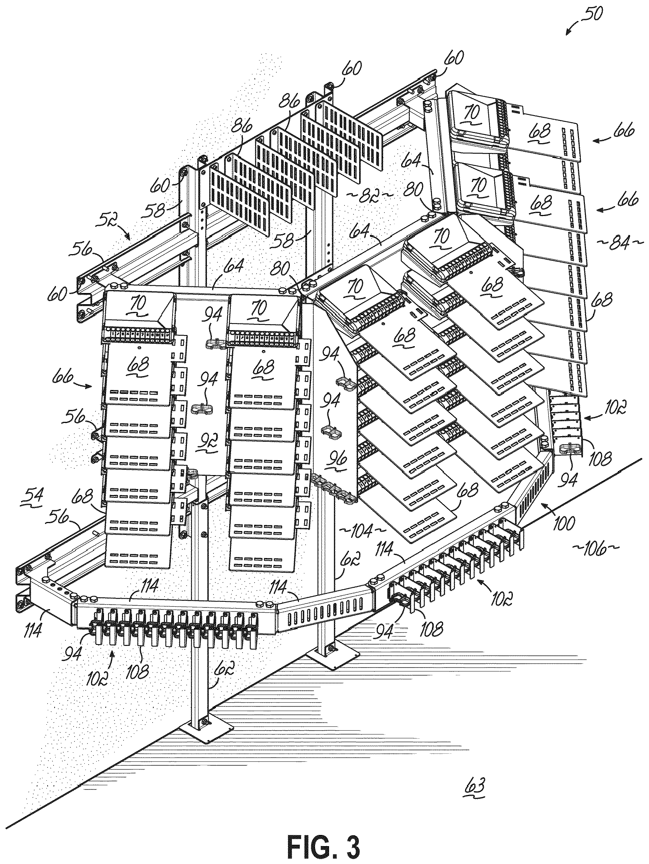

As more and more buildings 14 are connected to the vault 16 via the auxiliary cables 18, the number of furcation legs 40 to connect to the multiport terminals 34 will continue to increase. When a large number of buildings 14 are connected to the vault 16, the large number of auxiliary cables 18 and even more so the large number of furcation legs 40 may be challenging to identify, sort, arrange, organize, and retain. An equipment mounting arrangement 50 shown in Fig. 3 according to one embodiment of the disclosure addresses these various challenges.

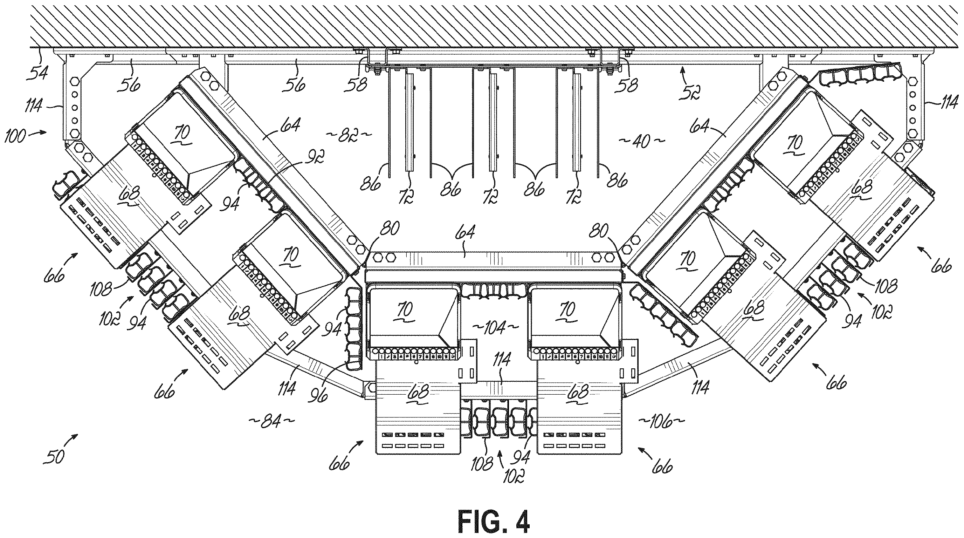

With reference to Figs. 3 and 4, the equipment mounting arrangement 50 includes a mounting frame 52 for securing the equipment mounting arrangement 50 to a support wall 54 in the vault 16. In one embodiment, the mounting frame 52 may include horizontal frame rails 56 and vertical frame rails 58 that are configured to be secured to the support wall 54 with fasteners 60 such as bolts or screws, for example. The mounting frame 52 may also include support legs 62 removably attached to either the horizontal frame rails 56 or the vertical frame rails 58 to support the mounting frame 52 on a support surface 63, such as a floor of the vault. In that regard, the legs 62 may help hold the mounting frame 52 at a desired horizontal and vertical position as the mounting frame 52 is being secured to the support wall 54 with the fasteners 60. After the mounting frame 52 is secured to the support wall 54, the legs 62 may be left in place or they may be removed. That is, once the mounting frame 52 is fully secured to the support wall 54, the support legs 62 are not required to support the mounting frame 52 and may be removed as dictated by the installation requirements. In this regard, the legs 62 may operate as an installation tool.

The equipment mounting arrangement 50 may further include a plurality of terminal supports 64 connected to and supported by the mounting frame 52. While Figs. 3 and 4 show three terminal supports 64, fewer or more terminal supports 64 may be included in the equipment mounting arrangement 50. Each terminal support 64 carries at least one terminal bracket 66, with at least one terminal bracket 66 including a plurality of shelves 68. In an exemplary embodiment, each of the terminal supports 64 may carry a plurality of terminal brackets 66. For example, there may be two terminal brackets 66 on each of the terminal supports 64 shown in Figs. 2 and 3. However, there may be more terminal brackets 66 in alternative embodiments.

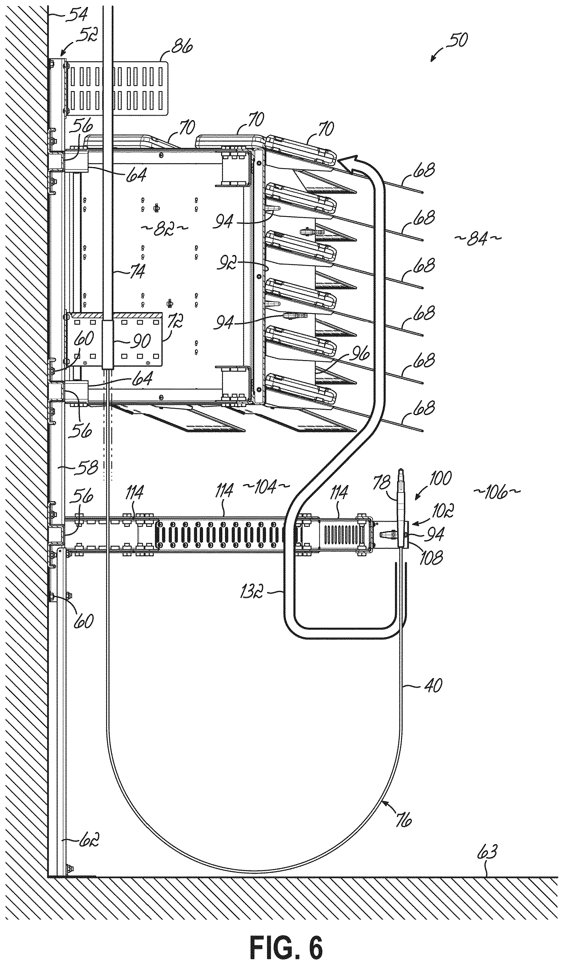

The equipment mounting arrangement 50 may further include a plurality of terminals 70. At least some of the plurality of shelves 68 includes a respective one of the plurality of the terminals 70. The terminals 70 may be the same or similar to the multiport terminals 34 discussed above in reference to Fig. 2. The equipment mounting arrangement 50 further includes a cable mount 72 configured to support a plurality of fiber optic cables 74 (Fig. 6), the same or similar as the auxiliary cables 18 discussed above in reference to Figs. 1 and 2. Each of the plurality of fiber optic cables 74 may include a terminated end 76 having a plurality of fiber optic connectors 78 (e.g., the same as the optical connectors 36 in Fig. 2) that are configured to be connected to the plurality of terminals 70. In one embodiment, however, the cable mount 72 may be connected to the mounting frame 52. In an alternative embodiment, the cable mount 72 may be connected to the support wall 54 or the support surface 63 independent of the mounting frame 52.

As shown in Figs. 3 and 4, in one embodiment, the plurality of terminal supports 64 may be arranged adjacent to each other in a side-by-side manner. For example, in an exemplary embodiment, adjacent terminal supports may be connected to each other at confronting side edges 80. In one embodiment, the plurality of terminal supports 64 may be arranged in a generally arcuate configuration defining a concave side and a convex side such that the concave side defines an inner region 82 and the convex side defines an outer region 84 opposite the inner region 82. The inner region 82 is on the same side as the center of curvature of the arcuate configuration of the terminal supports 64. Put another way, when the equipment mounting arrangement 50 is secured to the support wall 54, the inner region 82 is between the concave side of the arcuate configuration and the support wall 54 whereas the outer region 84 is on the convex side of the arcuate configuration which is opposite the concave side. In one embodiment, the cable mount 72 may be positioned in the inner region 82 of the arcuate configuration. Furthermore, the at least one terminal bracket 66 may be connected to its respective terminal support 64 so as to be positioned in the outer region 84 of the arcuate configuration (i.e., on the side of the terminal support 64 opposite the cable mount 72). As shown in Figs. 3 and 4, in one embodiment, the plurality of terminal supports 64 may be arranged as a portion of a polygon to define the generally arcuate configuration with the cable mount positioned on the "inside" of the polygon.

The equipment mounting arrangement 50 may further include a cable guide 86 positioned generally above the cable mount 72. In an alternative embodiment, the cable guide 82 may be connected to the support wall 54 and/or the support surface 63. In one embodiment, the cable guide 86 may be connected to the mounting frame 52. In these embodiments, the cable guide 86 assists with guiding the plurality of fiber optic cables 74 toward the cable mount 72. The fiber optic cables 74 may be connected to the cable guide 86 with a flexible fastener, such as zip tie, or other tie downs, for example.

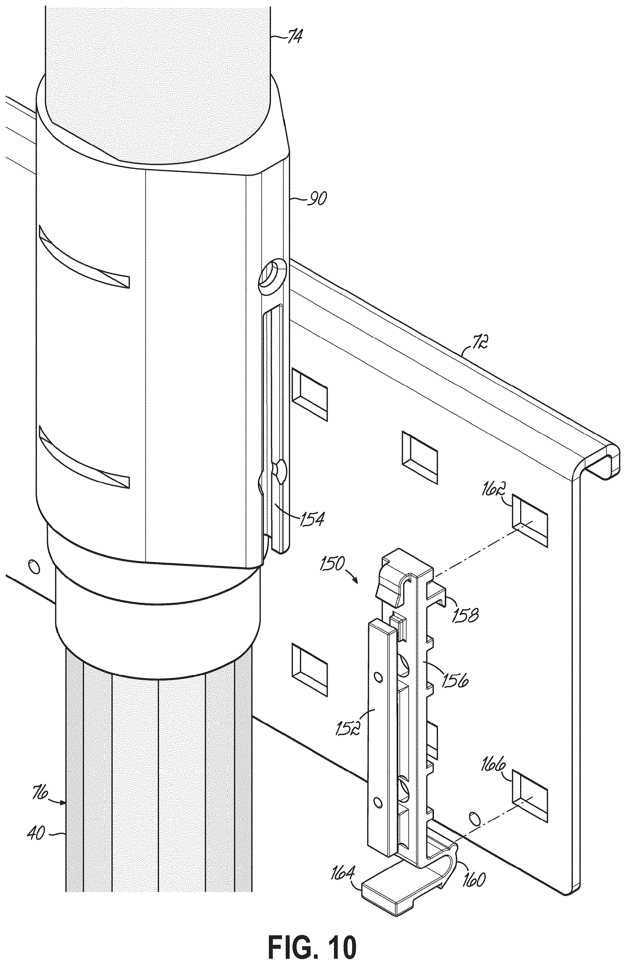

As noted above, the cable mount 72 is configured to support a plurality of the fiber optic cables 74. For the sake of clarity, the accompanying figures, such as Fig. 6, show only one representative fiber optic cable 74. It should be appreciated, however, that the equipment mounting arrangement 50 is configured to accommodate a plurality of fiber optic cables 74. In one embodiment, each of the fiber optic cables 74 includes a furcation housing 90 adjacent the terminated end 76. The cable mount 72 may be configured to support the furcation housing 90 of each of fiber optic cables 74. Referring to Fig. 10, in one embodiment, the cable mount 72 may support the furcation housing 90 through a releasable connection 150. For example, the releasable connection 150 may include a slide 152 and a slide receiver 154, wherein the slide receiver 154 is configured to receive the slide 152 to releasably connect the furcation housing 90 to the cable mount 72. In the embodiment shown in Fig. 10, the slide 152 is coupled to an attachment member 156 that connects to the cable mount 72, and the slide receiver 154 is part of the furcation housing 90. In another embodiment, the slide may be part of the furcation housing 90 and the slide receiver maybe connected to the cable mount 72. The attachment member 156 includes a top retention member 158 and a bottom retention member 160. The top retention member 158 is generally L-shaped and is configured to engage an upper opening 162 in the cable mount 72. The bottom retention member 160 is generally U-shaped with an extending portion 164. The bottom retention member 160 is configured to engage a lower opening 166 in the cable mount 72. This provides a snap-fit connection between the attachment member 156 and the cable mount 72. To remove the attachment member 156 from the cable mount 72, the extending portion 164 is lifted upwardly to disengage the bottom retention member 160 from the lower opening 166. After that, the top retention member 158 may be removed from the upper opening 162.

In one embodiment, each of the terminal supports 64 may include a first partition panel 92, which may include at least one retention clip 94 as shown in Fig. 3. In an exemplary embodiment, there may be a second partition panel 96 positioned between adjacent terminal supports 64. The second partition panel 96 may include at least one retention clip 94. As shown in Fig. 3, the second partition panel 96 may be oriented at an angle to the first partition panel 92, such as an obtuse angle. The partition panels 92, 96 are configured to facilitate fiber management in the equipment mounting arrangement 50, as explained in more detail below.

In one aspect of the disclosure, the equipment mounting arrangement 50 may further include a parking frame 100 which may be connected to the mounting frame 52 in one embodiment. In an alternative embodiment, the parking frame 100 may be connected to the support surface 63 of the mounting frame 52. In an exemplary embodiment, a plurality of parking devices 102 may be connected to the parking frame 100. Each parking device 102 is configured to hold one or more unused fiber optic connectors 78. In one embodiment, the parking frame 100 may be arranged in a generally arcuate configuration that defines an inner region 104 and outer region 106. The discussion regarding how the inner region 82 and outer region 84 are defined and located is similar to the inner region 104 and the outer region 106 described above. In that regard, the cable mount 72 may be positioned in the inner region 104 of the generally arcuate configuration of the parking frame 100. Furthermore, the plurality of parking devices 102 may be connected to the parking frame so as to be positioned in the outer region 106 of the generally arcuate configuration of the parking frame 100. As shown in Figs. 3 and 4, the parking frame 100 may be arranged as a portion of a polygon to define the generally arcuate configuration.

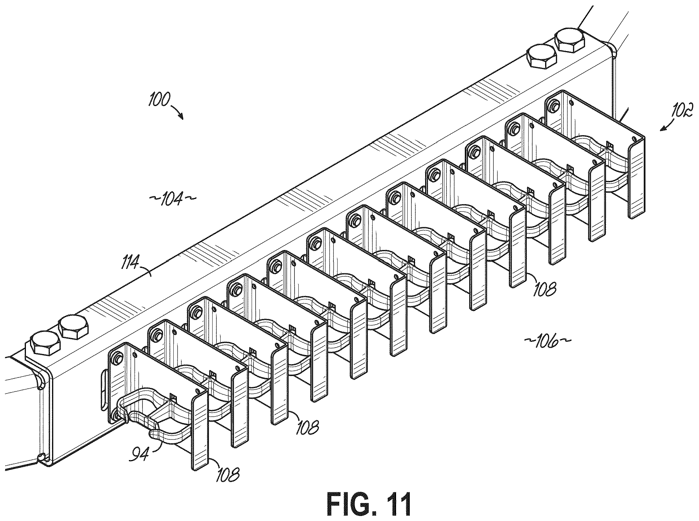

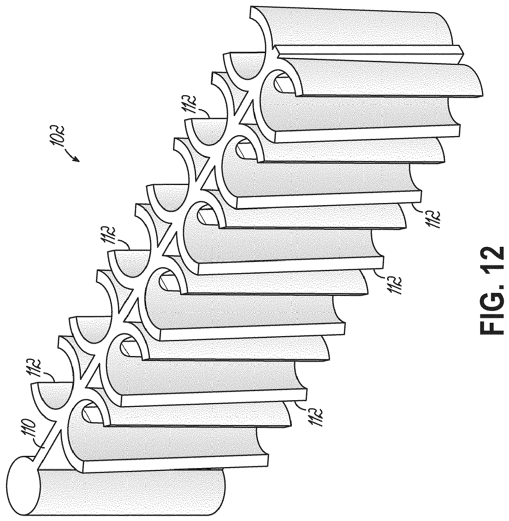

In the embodiment shown in Fig. 11, each of the plurality of parking devices 102 may include a parking bracket 108 connected to and extending from the parking frame 100. At least one of the retention clips 94 is connected to the parking bracket 108. The retention clip 94 is configured to hold one or more unused fiber optic connectors 78 from the plurality of fiber optic cables 74. In another embodiment shown in Fig. 12, each of the plurality of parking devices 102 may include a parking bracket 110 connected to and extending from the parking frame 100. A plurality of slide tubes 112 are connected to the parking bracket 110. Each slide tube 112 is configured to hold an unused fiber optic connector 78 from the plurality of fiber optic cables 74.

In one embodiment, the parking frame 100 may include a plurality of rail segments 114. The plurality of rail segments 114 may be arranged in the generally arcuate configuration. Selected ones of the plurality of rail segments 114 may include the plurality of parking devices 102 and those particular rail segments 114 may be generally aligned with and positioned below respective ones of the terminal supports 64 as shown in Figs. 3-4.

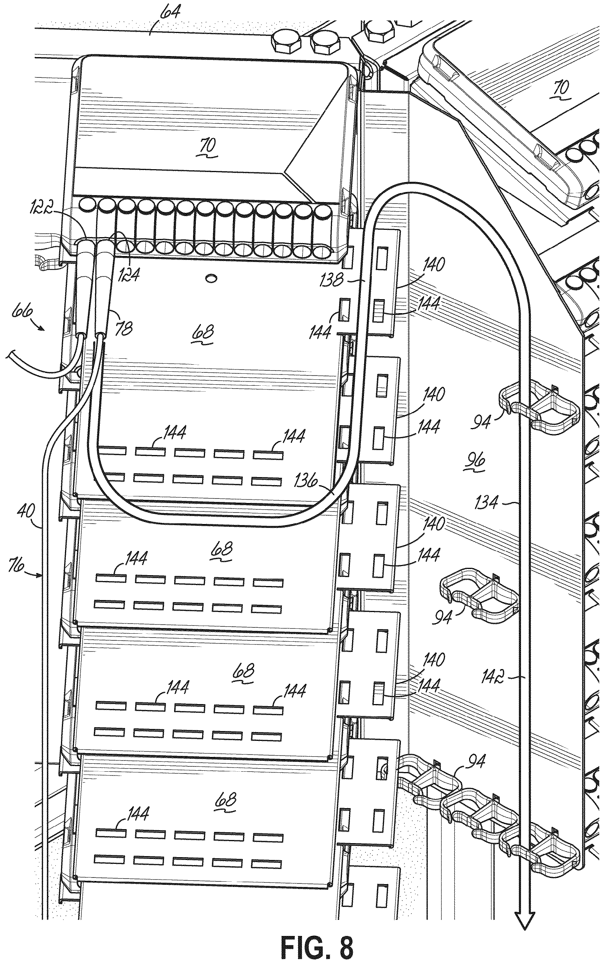

The disclosure contemplates a fiber optic network, such as the data center 12 in Fig. 1. The fiber optic network includes at least one vault 16 defining an interior 120 and at least one of the equipment mounting arrangement 50 described above may be positioned within the interior of the vault 16. In addition, each of the plurality of terminals 70 includes at least one input port 122 and a plurality of auxiliary ports 124 as shown in Fig. 8. In one embodiment, the fiber optic network may include at least one backbone cable 10 carrying a plurality of optical fibers. At least some of the backbone optical fibers may be in optical communication with the input ports 122 of the plurality of terminals 70 in the at least one equipment mounting arrangement 50. In the fiber optic network, the plurality of fiber optic connectors 78 may include the plurality of auxiliary cables, i.e., fiber optic cables 74, which carry a plurality of auxiliary optical fibers (not shown). At least some of the auxiliary optical fibers may be in optical communication with the plurality of auxiliary ports 124 in the plurality of terminals 70. Each of the plurality of auxiliary cables, i.e., fiber optic cables 74, may include the end 76 which includes the furcation housing 90 and the plurality of furcation legs 40 extending from the furcation housing 90. Each of the furcation legs 40 may include some of the plurality of fiber optic connectors. In one embodiment, a first group of the plurality of fiber optic connectors 78 from the plurality of auxiliary cables 74 may be connected to respective auxiliary ports 124 in the plurality of terminals 70, and a second group of the plurality of fiber optic connectors 78 from the plurality of auxiliary cables 74 may be connected to one of the plurality of parking devices 102.

The disclosure further contemplates a method for configuring a fiber optic network. The method includes providing at least one vault 16 defining the interior 120 and providing at least one equipment mounting arrangement 50 as described above in the interior 120. Each of the terminals 70 in the equipment mounting arrangement 50 includes at least one input port 122 and the plurality of output ports 124. The method further includes optically connecting at least some of the backbone optical fibers (not shown) in the backbone cable 10 with at least some of the input ports 122 of the plurality terminals 70 in the equipment mounting arrangement 50. The method further includes optically connecting a first group of the plurality of the fiber optic connectors 78 of the at least one auxiliary cable 74 to respective auxiliary ports 124 of the plurality of terminals 70 of the at least one equipment mounting arrangement 50. The method further includes connecting a second group of the plurality of the fiber optic connectors 78 of the at least one auxiliary cable 74 to respective parking devices 102 of the equipment mounting arrangement 50.

In one embodiment, the method may further include subsequently removing at least one fiber optic connector 78 of the second group of the plurality of fiber optic connectors 78 from its respective parking device 102 and optically connecting the at least one fiber optic connector 78 to a respective auxiliary port 124 of the plurality of terminals 70 of the equipment mounting arrangement 50.

In one embodiment, the method may include subsequently expanding the fiber optic network. In that regard, expanding the fiber optic network may include providing additional fiber optic cables, such additional auxiliary cables 74. Thus, in one embodiment, the method may include providing another at least one auxiliary cable 74 carrying a plurality of auxiliary optical fibers (not shown). The another at least one auxiliary cable 74 may include a terminated end 76 having a plurality of fiber optic connectors 78. The method may include optically connecting a third group of the plurality of fiber optic connectors 78 of the another at least one auxiliary cable 74 to respective auxiliary ports 124 of the plurality of terminals 70 of the equipment mounting arrangement 50, and connecting a fourth group of the plurality of fiber optic connectors 78 of the another at least one auxiliary cable 74 to a respective parking device 102 of the plurality of parking devices 102 of the equipment mounting arrangement 50.

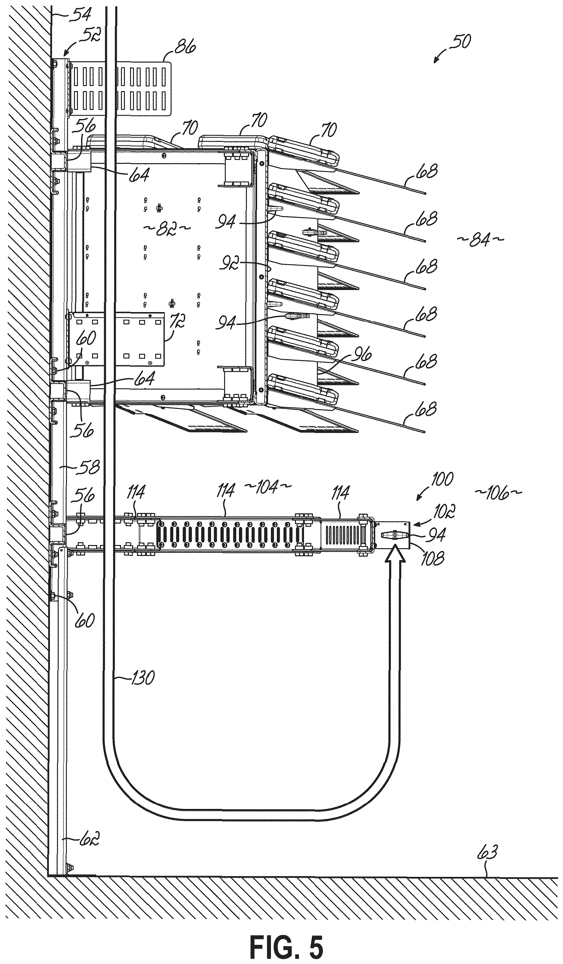

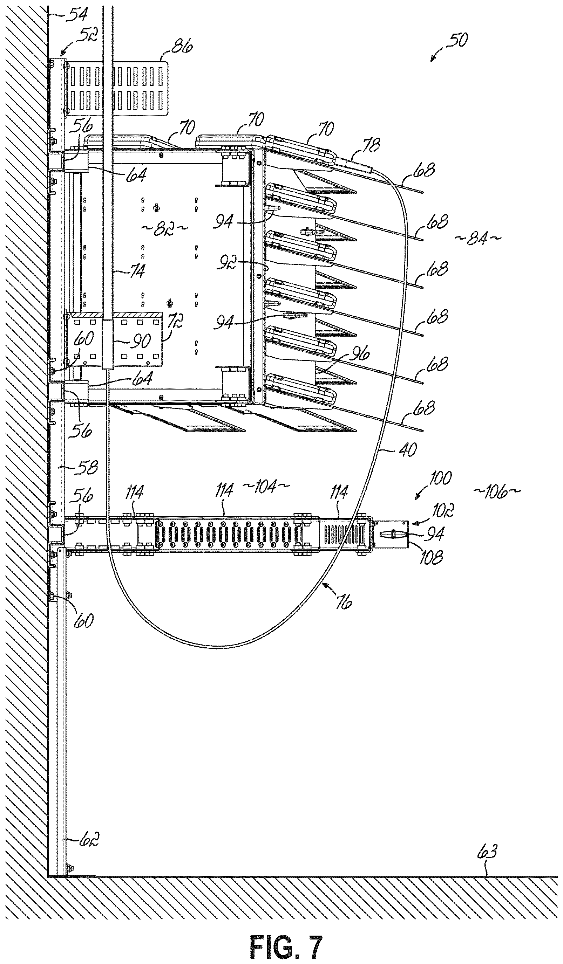

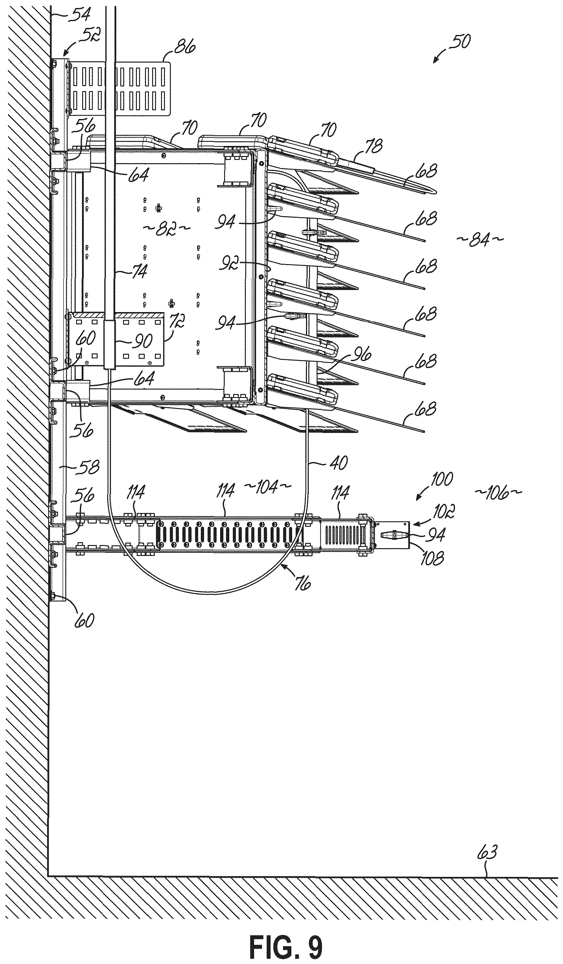

Figures 5-9 show an exemplary sequence for routing one of the auxiliary cables 74 to one of the parking devices 102 and then subsequently routing it to one of the auxiliary ports 124 in one of the terminals 70. Fig. 5 is a cross-sectional view of the equipment mounting arrangement 50. The long arrow 130 shows an exemplary path for an auxiliary cable 74 entering from above the equipment mounting arrangement 50, extending past the cable guide 86 and the cable mount 72, looping past the parking frame 100 and then up to one of the parking devices 102. Fig. 6 shows one auxiliary cable 74 generally following the path of arrow 130 in Fig. 5 such that the fiber optic connector 78 is coupled to one of the parking devices 102. The furcation housing 90 is connected to the cable mount 72. Fig. 6 also shows an exemplary path (arrow 132) for when the auxiliary cable 74 is removed from the parking device 102 to be connected to one of the auxiliary ports 124 in one of the terminals 70. Fig. 7 shows the auxiliary cable 74, and more particularly, the furcation leg 40 connected to the terminal 70. In Fig. 7, however, the auxiliary cable 74 is not laid out in its final routing configuration. Fig. 8 shows an exemplary path (arrow 134) where the auxiliary cable 74 will reside in its final routing configuration. The final routing configuration as shown by arrow 134 will have a curved portion 136 of the auxiliary cable 74 and, more particularly, the furcation leg 40 resting upon the shelf 68. Another portion 138 of the furcation leg 40 will rest upon a lateral extension 140 of the shelf 68. Another portion 142 of the furcation leg 40 then goes down the second partition panel 96 and is secured by one or more of the retention clips 94. The shelf 68 and the lateral extension 140 may include a plurality of openings 144. The portions 136, 138 of the furcation leg 40 may be secured to the shelf 68 and the lateral extension 140 using flexible fasteners, such as zip ties or other tie downs. Fig. 8 shows the furcation leg 40 connected to the "right" side terminals 70 on the terminal bracket 66. When one of the furcation legs 40 is connected to one of the "left" side terminals 70 on the terminal bracket 66, the portion 142 of the furcation leg 40 will be secured to the first partition panel 92 instead of the second partition panel 96.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

1. An equipment mounting arrangement for a fiber optic network, comprising:
a mounting frame;
a plurality of terminal supports connected to the mounting frame, wherein each of the plurality of terminal supports carries at least one terminal bracket, and wherein the at least one terminal bracket includes a plurality of shelves;
a plurality of terminals, wherein at least some of the plurality of shelves of the equipment mounting arrangement includes a respective one of the plurality of terminals; and
a cable mount for supporting a plurality of fiber optic cables, each of the plurality of fiber optic cables having a terminated end including a plurality of fiber optic connectors configured to be connected to the plurality of terminals in the equipment mounting arrangement.

2. The equipment mounting arrangement of claim 1, wherein the mounting frame is configured to be fixedly connected to a support wall.

3. The equipment mounting arrangement of claim 1 or 2, wherein the mounting frame includes a plurality of support legs for at least temporarily supporting the mounting frame on a support surface.

4. The equipment mounting arrangement of any of claims 1-3, wherein the plurality of terminal supports is arranged adjacent to each other in a side-by-side manner, and wherein adjacent terminal supports of the plurality of terminal supports are connected to each other at confronting edges thereof.

5. The equipment mounting arrangement of any of claims 1-4, wherein the plurality of terminal supports is arranged in a generally arcuate configuration that defines an inner region and an outer region, and wherein the cable mount is positioned within the inner region of the generally arcuate configuration.

6. The equipment mounting arrangement of claim 5, wherein the at least one terminal bracket of each of the plurality of terminal supports is connected to its respective terminal support so as to be positioned within the outer region of the generally arcuate configuration.

7. The equipment mounting arrangement of any of claims 1-6, wherein the cable mount is connected to the mounting frame.

8. The equipment mounting arrangement of claim 1, wherein each of the plurality of fiber optic cables includes a furcation housing adjacent the terminated end, and wherein the cable mount is configured to support the furcation housing of each of the plurality of fiber optic cables through a releasable connection, the releasable connection comprising:
a slide on one of the furcation housing or the cable mount; and
a slide receiver on the other of the furcation housing or the cable mount,
wherein the slide receiver is configured to receive the slide to releasably connect the furcation housing to the cable mount.

9. The equipment mounting arrangement of any of claims 1-8, further comprising a cable guide connected to the mounting frame above the cable mount for guiding the plurality of fiber optic cables toward the cable mount.

10. The equipment mounting arrangement of any of claims 1-9, wherein each of the plurality of terminal supports carries a plurality of terminal brackets.

11. The equipment mounting arrangement of any of claims 1-10, wherein each of the plurality of terminal supports includes a first partition panel, and wherein the first partition panel includes at least one retention clip.

12. The equipment mounting arrangement of any of claims 1-11, further comprising a second partition panel positioned between adjacent terminal supports of the plurality of terminal supports, the second partition panel including at least one retention clip.

13. The equipment mounting arrangement of any of claims 1-12, further comprising:
a parking frame positioned adjacent the plurality of terminal supports; and
a plurality of parking devices connected to the parking frame, each of the plurality of parking devices configured to hold one or more unused fiber optic connectors from the plurality of fiber optic cables.

14. The equipment mounting arrangement of claim 13, wherein the parking frame is arranged in a generally arcuate configuration that defines an inner region and an outer region, wherein the cable mount is positioned on the inner region of the generally arcuate configuration, and wherein each of the plurality of parking devices is connected to the parking frame so as to be positioned on the outer region of the generally arcuate configuration.

15. The equipment mounting arrangement claim 13, wherein each of the plurality of parking devices comprises a parking bracket connected to and extending from the parking frame, and wherein each of the plurality of parking devices further comprises either of the following:
at least one retention clip connected to the parking bracket, the at least one retention clip configured to hold one or more unused fiber optic connectors from the plurality of fiber optic cables; or
a plurality of slide tubes connected to the parking bracket, each of the plurality of slide tubes configured to hold an unused fiber optic connector from the plurality of fiber optic cables.
